# EUROPÄISCHE PATENTSCHRIFT

(11) **EP 3 433 220 B1**
(45) Veröffentlichungstag und Bekanntmachung des Hinweises auf die Patenterteilung: **24.11.2021**
(21) Anmeldenummer: 17713908.6
(22) Anmeldetag: 22.03.2017
(51) Int. Cl.: C04B 37/02, H01T 4/12, H01T 4/04

(54) **VERFAHREN ZUR HERSTELLUNG EINER GASDICHTEN METALL-KERAMIKVERBINDUNG**
PROCESS FOR PRODUCING A GAS-TIGHT METAL-CERAMIC JOIN
PROCÉDÉ DE RÉALISATION D'UNE LIAISON MÉTAL-CÉRAMIQUE ÉTANCHE AUX GAZ

(30) Priorität: 23.03.2016 DE 102016105456
(43) Veröffentlichungstag der Anmeldung: 30.01.2019
(73) Patentinhaber: TDK Electronics AG, 81671 München (DE)
(72) Erfinder: HOFFMANN, Robert, 12163 Berlin (DE); OBERMAIR, Stefan, 8510 Stainz (AT)
(74) Vertreter: Epping - Hermann - Fischer
(86) Internationale Anmeldenummer: PCT/EP2017/056816
(87) Internationale Veröffentlichungsnummer: WO 2017/162735

(56) Entgegenhaltungen:
- EP-A1- 0 356 678
- EP-A2- 0 629 596
- DE-C- 714 139
- DE-C1- 4 111 189
- DE-T2- 3 886 898
- DE-T5-112013 005 344
- JP-A- S63 294 640
- US-A1- 2003 066 865

## Beschreibung

Die vorliegende Erfindung betrifft ein Verfahren zur Herstellung einer gasdichten Metall-Keramikverbindung. Die Anmeldung erwähnt ferner die Verwendung der gasdichten Metall-Keramikverbindung in einem Überspannungsableiter sowie einen Überspannungsableiter. Diese sind nicht Teil der Erfindung.

Gasableiter bestehen in der Regel aus einem gelochten keramischen Grundkörper (i.A. einem Ring aus Aluminiumoxid), an dessen Öffnungen zwei Metallkappen angebracht sind. Die Metallkappen sind normalerweise Kupferkappen, welche mittels Hartlotverbindungen an die Keramik angebunden sind. Keramikkörper, Hartlotverbindung und Metallkappen sind gasdicht, so dass die während des Hartlötvorgangs vorherrschende Atmosphäre hermetisch im Inneren des Gasableiters eingeschlossen wird.

Bei Anlegen einer elektrischen Spannung an die beiden Metallkappen kommt es bei Überschreiten einer für die Bauteilkonfiguration und Gaszusammensetzung typischen Zündspannung zum elektrischen Überschlag innerhalb des Gasableiters. Auf diese Weise können elektrische Verbraucher gegen Überspannungen geschützt werden.

EP 0 629 596 A2 beschreibt ein Verfahren zur Herstellung einer Innenlötung bei Metall-Keramik-Verbunden. Ein keramischer Werkstoff besitzt eine durchgängige Ausnehmung, in der passgenau ein metallischer Stift angeordnet und durch eine Innenlötung unter Verwendung einer Kupfer-Silber-Legierung mit dem keramischen Werkstoff verbunden wird.

US 2003/0066865 A1 beschreibt ein Herstellungsverfahren für einen Träger aus einem keramischen Substrat. Eine metallische Paste aus Ag, Cu, Ti und TiO₂ wird auf beiden Hauptseiten eines keramischen Substrates aufgebracht, um beidseitig je eine Kupferplatte dauerhaft mit dem Substrat zu verbinden. Die Paste wird zu diesem Zweck auf 835°C erhitzt und verbleibt nach dem Aufschmelzen in einer Dicke von etwa 20 µm.

DE 38 86 898 T2 beschreibt ein Verfahren zur Herstellung eines Überspannungsableiters, bei dem Elektroden durch Einbrennen einer Silberpaste auf Bereichen der Vorder- und Rückseite eines keramischen Varistorelements geschaffen werden. Elektrodenplatten werden mit den Elektroden verbunden, indem eine Lotpaste aufgedruckt und getrocknet wird. Die Platten werden unter Wärmeanwendung auf die Elektroden gedrückt.

Eine zu lösende Aufgabe besteht darin, ein verbessertes Verfahren zur Herstellung einer gasdichten Metall-Keramikverbindung und damit eine verbesserte gasdichte Metall-Keramikverbindung anzugeben.

Diese Aufgabe wird durch das Verfahren mit den Merkmalen des Anspruchs 1 gelöst. Ausgestaltungen ergeben sich aus den abhängigen Ansprüchen.

Gemäß der Erfindung wird ein Verfahren zur Herstellung einer gasdichten Metall-Keramikverbindung angegeben. Das Verfahren zielt darauf ab eine gasdichte Metall-Keramikverbindung zum Einsatz in einem Überspannungsableiter zur Verfügung zu stellen. Durch das Verfahren kann der Überspannungableiter hergestellt werden. Das Verfahren weist die folgenden Schritte auf:
- Bereitstellen wenigstens eines keramischen Grundkörpers, vorzugsweise einer Vielzahl von keramischen Grundkörpern. Der jeweilige Grundkörper weist eine erste Stirnseite und eine zweite Stirnseite auf. Die Stirnseiten liegen einander gegenüber. Die Stirnseiten sind durch eine gemeinsame Außenfläche oder Mantelfläche des Grundkörpers miteinander verbunden. Die Mantelfläche umgibt einen Hohlraum, der den Grundkörper vollständig durchdringt. Der Grundkörper ist ringförmig oder zylinderförmig.
- Aufbringen einer Metallisierung auf zumindest einen Teilbereich der Stirnseiten des Grundkörpers. Die Metallisierung kann Molybdän, Mangan und / oder Wolfram aufweisen. Vorzugsweise wird die Metallisierung in Form einer Metallpaste auf die Stirnseiten aufgebracht und eingebrannt.
- Aufbringen einer belotungsfähigen Schicht, nämlich eine Nickelschicht, auf den metallisierten Bereich. Dies dient dazu den Kontakt, insbesondere die Verbindung, des Grundkörpers zu einem Lotmaterial zu ermöglichen.
- Bereitstellen bzw. Ausbilden einer Lotpaste. Aufbringen der Lotpaste auf den metallisierten Teilbereich der ersten Stirnseite und/oder der zweiten Stirnseite des Grundkörpers. Das Bereitstellen und Aufbringen der Lotpaste dient zur Ausbildung einer einzelnen Lotschicht. Insbesondere weist die Lotschicht keinen mehrlagigen Aufbau auf. Mit anderen Worten, durch das Verfahren wird eine Lot-Einzelschicht auf den Stirnseiten des Grundkörpers bereitgestellt.

Das Aufbringen der Lotpaste auf die erste und die zweite Stirnseite kann beispielsweise gleichzeitig erfolgen. Alternativ dazu kann Lotpaste zunächst auch nur auf eine Stirnseite aufgebracht werden und weiterprozessiert werden, bevor Lotpaste auch auf die zweite Stirnseite aufgebracht wird.
- Trocknen und Entkohlen der Lotpaste. Dies erfolgt beispielsweise in dem der mit Lotpaste versehene Grundkörper einer Temperatur von 250° C bis 350 °C ausgesetzt wird.
- Einbrennen der Lotpaste. Dies erfolgt beispielsweise bei einer Temperatur von größer oder gleich 790 °C unter einer vorgegebenen Atmosphäre, beispielsweise einer Ar / H₂ Atmosphäre. Vorzugsweise erfolgt das Einbrennen der Lotpaste bei einer Temperatur zwischen 790° C und 870 °C.

Durch das Verfahren können sehr dünne Schichten an Lotmaterial realisiert werden, was zu erheblicher Kosteneinsparung führt. Überschüsse an Lotmaterial, beispielsweise durch die Verwendung eines Lotrings an Stelle der Lotpaste, entfallen. Gleichzeitig kann durch das Verfahren eine große Anzahl an Bauteilen gleichzeitig prozessiert werden. Dadurch wird ein effizientes und kostengünstiges Verfahren bereitgestellt.

Gemäß einem Ausführungsbeispiel wird die Lotpaste in einem Druck- oder Tauchverfahren auf die Stirnseiten des Grundkörpers aufgebracht. Beispielsweise kann nur eine Stirnseite in die Lotpaste getaucht werden. Alternativ dazu können auch beide Stirnseiten gleichzeitig in die Lotpaste eingetaucht werden. Dies hat den Vorteil, dass das Wiederholen der Temperaturprozesse zum Trocknen und Sinter der Lotpaste nur einmal durchgeführt werden muss. Das Eintauchen der jeweiligen Stirnseite in das Lotmaterial führt zu einer gleichmäßigen Verteilung des Lotmaterials auf der Stirnseite. Ein Überschuss an Lotmaterial kann vermieden werden. Damit wird ein besonders kostengünstiges Verfahren bereitgestellt.

Gemäß einem Ausführungsbeispiel weist die Lotpaste Silber und Kupfer auf. Vorzugsweise weist die Lotpaste neben anderen Be-standteilen Silber und Kupfer im Verhältnis 72% / 28 % auf. Damit wird eine einzige Lotschicht bzw. eine Loteinzelschicht aufweisend Kupfer und Silber bereitgestellt.

Gemäß einem Ausführungsbeispiel werden zur Ausbildung der Lotpaste Metalle (insbesondere Silber und Kupfer) in Pulverform bereitgestellt. Ferner werden ein Bindemittel und / oder ein Lösungsmittel den Metallen flüssig beigemischt. Die Komponenten werden bei Umgebungstemperatur vermischt. Damit kann die Lotpaste auf einfache Art und Weise bereitgestellt werden.

Das Verfahren weist auch die folgenden weiteren Schritte auf:
- Bereitstellen von Elektroden. Es wird für jede Stirnseite des Grundkörpers eine Elektrode bereitgestellt. Die jeweilige Elektrode weist beispielsweise die Form einer Metallkappe auf.
- Anordnen von jeweils einer Elektrode auf der ersten und zweiten Stirnseite des Grundkörpers. Vorzugsweise wird die jeweilige Elektrode von der jeweiligen Stirnseite aus zumindest teilweise in den Hohlraum eingebracht. Ein Teilbereich der Elektrode wird dabei mit der jeweiligen Stirnseite in Anschlag gebracht. Weiterhin werden Elektroden und Grundkörper miteinander verbunden, insbesondere verlötet, zur Herstellung der gasdichten Verbindung zwischen Elektroden und Grundkörper.

Gemäß einem Ausführungsbeispiel erfolgt die Verbindung von Elektroden und Grundkörper bei einer Temperatur von 790 °C bis 870° C unter einer vorgegebenen Atmosphäre, insbesondere einer Sinteratmosphäre.

Eine Verwendung einer gasdichten Metall-Keramikverbindung in einem Ableiter zum Schutz vor Überspannungen wird beschrieben. Die gasdichte Metall-Keramikverbindung ist vorzugsweise durch das oben beschriebene Verfahren hergestellt. Alle Merkmale und Aspekte, die im Zusammenhang mit dem Verfahren beschrieben wurden, gelten auch für die Verwendung und umgekehrt. Durch die oben beschriebene Herstellung kann auf kostengünstige und einfache Art und Weise eine gasdichte Verbindung zwischen Elektroden und keramischen Grundkörper erreicht werden.

Ein Ableiter zum Schutz vor Uberspannungen wird beschrieben. Der Ableiter weist einen keramischen Grundkörper mit wenigstens einem Hohlraum auf. Der Ableiter weist Elektroden an gegenüberliegenden ersten und zweiten Stirnseiten des Grundkörpers auf. Die Elektroden sind mit dem Grundkörper verlötet. Insbesondere wurde eine gasdichte Verbindung zwischen Elektroden und Grundkörper durch das oben beschriebene Verfahren erzielt. Alle Merkmale und Aspekte, die im Zusammenhang mit dem Verfahren beschrieben wurden, gelten auch für den Ableiter und umgekehrt. Die Lotschicht zwischen der jeweiligen Elektrode und der Stirnseite weist ein Dicke von kleiner oder gleich 60 µm auf. Insbesondere weist die Lotschicht eine geringere Dicke auf als eine Lotschicht die durch die Verwendung eines Lotrings ausgebildet wurde. Damit wird ein besonders kostengünstiger Ableiter zur Verfügung gestellt. Die Lotschicht ist eine Einzelschicht. Mit anderen Worten, die Lotschicht weist eine einzige bzw. einzelne Schicht auf. Diese einzige Schicht weist Kupfer und Silber auf. Diese einzige Schicht weist eine Dicke von kleiner oder gleich 60 µm, bevorzugt kleiner oder gleich 40 µm, auf.

Gemäß einem Ausführungsbeispiel weist die Lotschicht Silber und Kupfer im Verhältnis 72% / 28 % auf.

Die nachfolgend beschriebenen Zeichnungen sind nicht als maßstabsgetreu aufzufassen. Vielmehr können zur besseren Darstellung einzelne Dimensionen vergrößert, verkleinert oder auch verzerrt dargestellt sein.

Elemente, die einander gleichen oder die die gleiche Funktion übernehmen, sind mit gleichen Bezugszeichen bezeichnet.

Es zeigen:
- Figur 1: einen Verfahrensschritt bei der Herstellung einer gasdichten Metall-Keramikverbindung,
- Figur 2: einen Verfahrensschritt bei der Herstellung einer gasdichten Metall-Keramikverbindung,
- Figur 3: einen Verfahrensschritt bei der Herstellung einer gasdichten Metall-Keramikverbindung,
- Figur 4: einen Verfahrensschritt bei der Herstellung einer gasdichten Metall-Keramikverbindung,
- Figur 5: einen Ableiter zum Schutz vor Überspannungen gemäß dem Stand der Technik,
- Figur 6: einen Ableiter zum Schutz vor Überspannungen mit einer erfindungsgemäßen gasdichten Metall-Keramikverbindung.

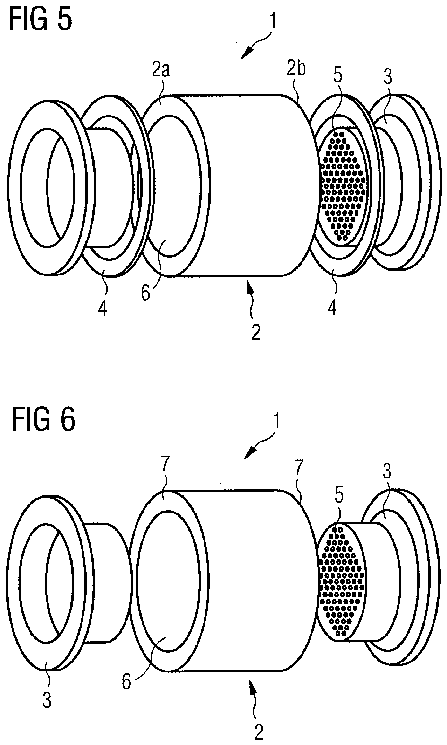

Gasdichte Metall-Keramikverbindungen finden beispielsweise im Überspannungsableitern bzw. Schaltfunkenstrecken Anwendung. Ein entsprechender Überspannungsableiter 1 nach dem Stand der Technik ist in der Figur 5 dargestellt. Ausschlaggebend bei der Herstellung derartiger Bauelemente ist das gasdichte Verbinden von Elektroden 3 mit einem keramischen Grundkörper 2. Der Grundkörper 2 ist zu diesem Zweck auf den Stirnseiten 2a, 2b metallisiert und in der Regel vernickelt, was eine lötfähige Oberfläche bereitstellt.

Bislang wurde ein Lotring 4 eingesetzt. Dieser besteht in der Regel aus einem Silber-Kupfer Eutektikum (Ag72, CU28). Der Lotring wird während des Herstellungsprozesses manuell aufgelegt um später bei Temperaturen um 820° C im Lötofen zu fließen und beim Erkalten die gewünschte gasdichte Verbindung herzustellen. Bisher verwendete Lotringe 4 haben eine Stärke bzw. Dicke von 60 µm bis 100 µm.

Prinzipiell könnte eine gasdichte Verbindung auch mit weniger Lotmaterial hergestellt werden, jedoch sind derart dünne Lotringe nicht handhabbar. Im Einsatz mit vorhandenem Werkzeug zur Herstellung haben sich insbesondere folgende Fehlerbilder mit Lotringen von kleiner 60 µm gezeigt:
- Gebogene Ringe (führt zu offenen Lotnähten),
- Ringe mit Knicken / Falten (führt zu offenen Lotnähten),
- Aneinander klebende Ringe, die zur doppelten Lotmenge pro Stirnseite führen und damit im weiteren Verlauf des Herstellungsprozesses zu einer erhöhten Silbermenge im Inneren des Bauteils und elektrischen Fehlern,
- Einseitig offene Bauteile, da der Lotring vom Auflegewerkzeug nicht richtig erfasst wurde oder an diesem kleben geblieben ist.

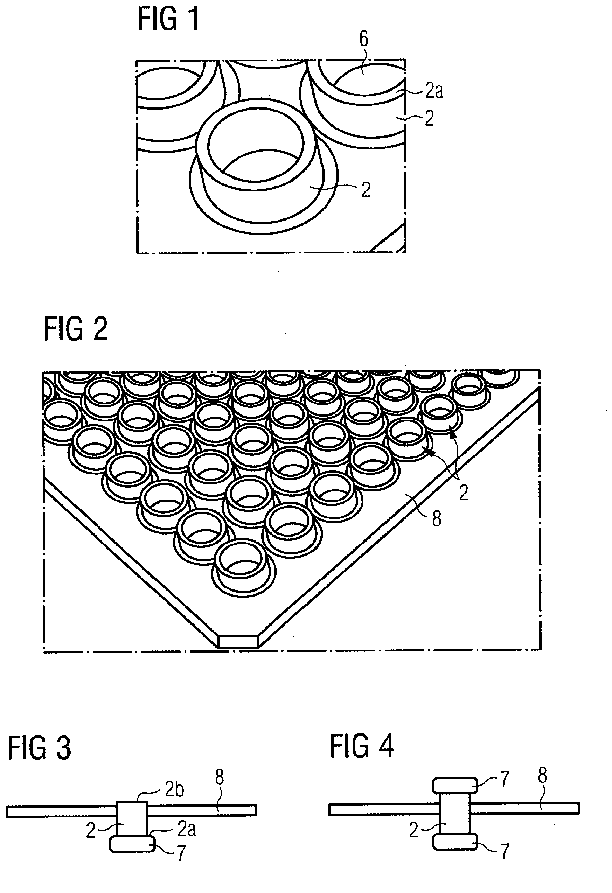

Um die oben aufgeführten Nachteile zu vermeiden, wird im Folgenden ein Verfahren zur Herstellung einer gasdichten Metall-Keramikverbindung beschrieben. Die Figuren 1 bis 4 zeigen dabei Verfahrensschritte bei der Herstellung der gasdichten Metall-Keramikverbindung.

In einem ersten Schritt wird wenigstens ein keramischer Grundkörper 2 bereitgestellt (siehe Figur 1). Der Grundkörper weist einen Hohlraum 6 auf. Der Hohlraum 6 durchdringt den Grundkörper 2 vollständig. Der Grundkörper 2 ist ringförmig oder zylinderförmig ausgebildet. Der Grundkörper 2 weist eine erste Stirnseite 2a und eine zweite Stirnseite 2b auf. Die Stirnseiten 2a, 2b sind einander gegenüberliegend angeordnet. Die Stirnseiten 2a, 2b sind durch eine Mantelfläche des Grundkörpers 2 miteinander verbunden. Vorzugsweise werden für das Herstellungsverfahren eine Vielzahl von keramischen Grundkörpern 2 bereitgestellt, beispielsweise 100, 200 oder 500 Grundkörper 2.

In einem weiteren Schritt werden die Stirnseiten des Grundkörpers 2 metallisiert. Beispielsweise wird hierfür eine Metallpaste auf die Stirnseiten 2a, 2b aufgebracht und eingebrannt. Die Metallpaste kann beispielsweise Molybdän, Mangan und/oder Wolfram aufweisen.

In einem weiteren Schritt wird die Metallisierung mit einer Nickelschicht versehen. Die Nickelschicht ist dazu vorgesehen, eine Verbindung zwischen der Metallisierung und einer Lotmasse zu gewährleisten.

Die Grundkörper 2 werden anschließend nebeneinander in einen Halter 8 eingesetzt (siehe Figur 2). In einem alternativen Ausführungsbeispiel kann die Metallisierung der Grundkörper 2 und/oder das Aufbringen der Nickelschicht auch nach Einbringen der Grundkörper 2 in den Halter 8 erfolgen.

Der Halter 8 ist beispielsweise eine Grundplatte mit Aussparungen zur Aufnahme der Grundkörper 2. Die Grundkörper 2 könnend derart in dem Halter 8 gelagert sein, dass eine Stirnseite (z.B. die erste Stirnseite 2a) aus der Grundplatte herausragt (siehe beispielsweise Figuren 2 und 3). Alternativ dazu kann der Halter 8 auch durchgehende Aussparungen für die Grundkörper 2 aufweisen, so dass sowohl die erste Stirnseite 2a als auch die zweite Stirnseite 2b aus dem Halter 8 herausragt (siehe Figur 3). Dies hat Einfluss auf den nachfolgenden Benetzungsschritt mit Lotmasse bzw. Lotpaste 7, wie später im Detail ausgeführt wird.

In einem weiteren Schritt wird die Lotmasse 7 vorbereitet. Die Lotmasse 7 nach Fertigstellung der gasdichten Metall-Keramikverbindung weist im wesentlichen Kupfer und Silber auf. Vorzugsweise weist die fertige Lotmasse 7 nach deren Trocknung und nach dem Einbrennen Silber und Kupfer in einem Verhältnis von 70% / 30% bis 75% /25 % auf. Die fertige Lotmasse 7 dient zur Bereitstellung einer einzigen Lotschicht bzw. einer Loteinzelschicht aufweisend Kupfer und Silber.

Zur Herstellung der Lotmasse 7 wird Silberpulver bereitgestellt. Ferner wird Kupferpulver bereitgestellt. Als weitere Bestandteile werden ein oder mehrere Bindemittel, z.B. Ethyl Cellulose, sowie ein Lösungsmittel bereitgestellt, wobei das Lösungsmittel insbesondere die Viskosität der Paste 7 beeinflusst. Die Komponenten werden bei Umgebungstemperatur miteinander vermengt, so dass eine Paste 7 mit den folgenden Be-standteilen entsteht:
- Silberpulver (Ag) zu 35 bis 65 Gewichts-%, vorzugsweise zu 59 Gewichts-%;
- Kupferpulver (Cu) zu 13 bis 30 Gewichts-%, vorzugsweise zu 23 Gewichts-%;
- Bindemittel zu 0,5 bis 15 Gewichts-%, vorzugsweise zu 3 Gewichts-%;
- Lösungsmittel zu 5 bis 40 Gewichts-%, vorzugsweise zu 21 Gewichts-%.

In einem weiteren Schritt wird der jeweilige Grundkörper 2 und insbesondere die Metallisierung von Verunreinigungen gereinigt. Anschließend wird die Lotmasse 7 auf die Stirnseiten 2a, 2b, insbesondere auf die metallisierten Bereiche der Stirnseiten 2a, 2b, aufgebracht. Zu diesem Zweck können die Grundkörper 2 teilweise in die Lotmasse 7 eingetaucht werden (so genannter "dip-printing process").

Gemäß einem ersten Ausführungsbeispiel wird zunächst die erste Stirnseite 2a in die Lotmasse 7 getaucht. Bei dieser Ausführung sind die Grundkörper 2 so in dem Halter 8 angeordnet dass zunächst lediglich die erste Stirnseite 2a, nicht jedoch die zweite Stirnseite 2b aus dem Halter herausragt 2b. Die Grundköper 2 werden mit der ersten Stirnseite 2a in die Lotmasse 7 getaucht, die zweite Stirnseite 2b bleibt zunächst unbenetzt (Figur 3).

Anschließend wird die auf der ersten Stirnseite 2a aufgebrachte Lotmasse 7 getrocknet und eingebrannt, wie im Folgenden noch genauer beschrieben wird. Erst danach wird die Lotmasse 7 auch auf die zweite Stirnseite 2b aufgebracht und anschließend der Trocknungs- und Einbrennprozess wiederholt. Gemäß einem weiteren Ausführungsbeispiel werden beide Stirnseiten 2a, 2b gleichzeitig bzw. simultan in die Lotmasse 7 getaucht und anschließend weiterprozessiert (siehe Figur 4). Dies hat den Vorteil, dass die anschließenden Trocknungs- und Einbrennschritte nicht mehrfach durchgeführt werden müssen. Bei dem Benetzungsschritt mit Lotmasse 7 werden jeweils ca. 13 mg Lotmasse gleichmäßig auf der ersten Stirnseite 2a und auf der zweiten Stirnseite 2b verteilt.

In einem anschließenden Schritt wird der Grundkörper 2 gesintert. Der Grundkörper 2 wird durchgeheizt um die Lotmasse 7 zu trocknen. Dabei wird der Grundkörper 2 zunächst für ca. 15 Minuten einer Temperatur von etwa 350° C ausgesetzt. Während dieses Temperaturschritts verdampfen die oben aufgeführten Binde- und Lösungsmittel. Das Gewicht der pro Stirnseite 2a, 2b aufgebrachten Lotmasse 7 verringert sich in diesem Schritt.

Anschließend wird der Grundkörper 2 - zum Einbrennen der Lotmasse 7 auf der Metallisierung - in einen Ofen eingebracht und für ca. 3 Minuten bei einer Temperatur von etwa 820 °C bis 830° C in einer vorgegebenen Atmosphäre vorgeheizt. Beispielsweise weist die Gaszusammensetzung in dem Ofen Ar / H₂ im Verhältnis 82 % / 18 % auf. Ferner reduziert sich das Gewicht der Lotmasse 7 pro Stirnseite 2a, 2b weiter. Nach diesem Schritt ist der Vorbelötungsprozess abgeschlossen.

Anschließend kann der Grundkörper 2 unter Standardbedingungen verlötet werden. Zu diesem Zweck werden pro Grundkörper 2 zwei Elektroden 3 bereitgestellt. Die Elektroden 3 sind beispielsweise in Form von Metallkappen ausgebildet. Die Elektroden 3 werden an den Stirnseiten 2a, 2b des Grundkörpers angeordnet. Anschließend wird der Grundkörper 2 mit den Elektroden 3 bei einer vorgegebenen Temperatur (ca. 850° C) unter einer vorbestimmten Atmosphäre durchgeheizt (Hartlötvorgang).

Das oben beschriebene Verfahren zur Herstellung einer gasdichten Metall-Keramikverbindung hat den Vorteil, dass sehr dünne Lotschichten realisiert werden können. Ferner kann eine Loteinzelschicht, das heißt eine Lotschicht bestehend aus nur einer einzigen Schicht realisiert werden. Beispielsweise hat die Lotschicht 7 zwischen Elektrode 3 und Stirnseite 2a, 2b eine Dicke von kleiner oder gleich 40 µm. Standard Lotringe mit Dicken von 60 µm oder mehr entfallen komplett. Ferner wird durch die Eintauchmethode weniger Überschuss produziert als bei den Standardverfahren mit Lotringen 4. Folglich können durch das oben beschriebene Verfahren auf kostengünstige Art und Weise sehr kompakte Bauteile hergestellt werden.

Ferner lassen sich durch das beschriebene Verfahren sehr viele Bauteile gleichzeitig vorbeloten. Das Risiko von gebogenen, geknickten, aneinander klebenden oder vergessenen Lotringen 4 entfällt.

Die gasdichten Grundkörper 2 können beispielsweise in einem Überspannungsableiter bzw. einer Schaltfunkenstrecke Anwendung finden, wie in Figur 6 dargestellt ist.

Der in Figur 6 dargestellte Ableiter 1 weist eine erste Elektrode 3 und eine zweite Elektrode 3 auf. Die Elektroden 3 weisen jeweils ein elektrisch leitfähiges Material auf. Die Elektroden sind als Metallkappen ausgebildet. An Innenflächen den Elektroden 3 kann ein Aktivierungsmaterial 5, beispielsweise Graphit 5 angeordnet sein. Das Aktivierungsmaterial 5 ist dazu vorgesehen, die Zündung zu erleichtern und den Funken zu führen.

Der Ableiter 1 weist einen keramischen Grundkörper 2 mit einem Hohlraum 6 zur Ermöglichung einer elektrischen Entladung zwischen den Elektroden 3 bei einer Überspannung auf. Bei einer Überspannung soll somit im Entladeraum eine Entladung, insbesondere eine Lichtbogenentladung, zwischen den Elektroden 3 stattfinden. Der Hohlraum 6 kann mit einem Gas, insbesondere einem Edelgas, gefüllt sein. Insbesondere ist der Hohlraum 6 mit dem oben beschriebenen Sintergas gefüllt.

Die Elektroden 3 sind an den Stirnseiten 2a, 2b des Grundkörpers 2 angeordnet und ragen beispielsweise teilweise in den Hohlraum 6 hinein. Zur gasdichten Verbindung zwischen den Elektroden 3 und dem Grundkörper 2 ist an den Stirnseiten 2a, 2b die oben beschriebene Lotmasse bzw. Lotschicht 7 ausgebildet. Durch das oben beschriebene Verfahren wird die gasdichte Metall-Keramikverbindung zwischen den Elektroden 3 und dem Grundkörper 2 über die Lotmasse 7 erreicht. Der fertige Ableiter 1 zeichnet sich im Gegensatz zu einem Ableiter 1 nach dem Stand der Technik (siehe Figur 5) dadurch aus, dass die Lotschicht zwischen Elektrode 3 und Stirnseite 2a, 2b sehr dünn ist. Insbesondere weist die Lotschicht 7 eine Dicke von kleiner oder gleich 60 µm auf. Die Lotschicht 7 weist Silber und Kupfer, vorzugsweise im Verhältnis 72 % zu 28 % auf.

### Bezugszeichenliste

- 1: Ableiter
- 2: Keramischer Grundkörper
- 2a: Erste Stirnseite
- 2b: Zweite Stirnseite
- 3: Elektrode
- 4: Lötring
- 5: Aktivierungsmaterial
- 6: Hohlraum
- 7: Lotpaste / Lotmasse
- 8: Halter

## Patentansprüche

1. Verfahren zur Herstellung einer gasdichten Metall-Keramikverbindung, aufweisend die Schritte:
A) Bereitstellen wenigstens eines keramischen Grundkörpers (2) aufweisend eine erste Stirnseite (2a) und eine zweite Stirnseite (2b), wobei der Grundkörper (2) ringförmig oder zylinderförmig ausgebildet ist und einen Hohlraum (6) aufweist, der den Grundkörper (2) vollständig durchdringt, und die Stirnseiten (2a, 2b) einander gegenüberliegend angeordnet und durch eine Mantelfläche des Grundkörpers (2) miteinander verbunden sind,
B) Aufbringen einer Metallisierung auf zumindest einen Teilbereich der Stirnseiten (2a, 2b) des Grundkörpers (2),
C) Aufbringen einer Nickelschicht auf den metallisierten Teilbereich der Stirnseiten (2a, 2b),
D) Bereitstellen und Aufbringen einer Lotpaste (7) auf den metallisierten Teilbereich der ersten Stirnseite (2a) und/oder der zweiten Stirnseite (2b) des Grundkörpers (2),
E) Trocknen der Lotpaste (7),
F) Einbrennen der Lotpaste (7),
G) Bereitstellen von Elektroden (3),
H) Anordnen von jeweils einer Elektrode (3) auf der ersten und zweiten Stirnseite (2a, 2b) des Grundkörpers (2) und verbinden von Elektroden (3) und Grundkörper (2).

2. Verfahren nach Anspruch 1,
wobei das Aufbringen der Lotpaste (7) auf die erste und die zweite Stirnseite (2a, 2b) gleichzeitig erfolgt.

3. Verfahren nach Anspruch 1,
wobei Lotpaste (7) zunächst auf die erste Stirnseite (2a) aufgebracht wird und anschließend die Schritte D) und E) durchgeführt werden, bevor Lotpaste (7) auf die zweite Stirnseite (2b) aufgebracht wird und die Schritte D)und E) für die zweite Stirnseite (2b) des Grundkörpers (2) wiederholt werden.

4. Verfahren nach einem der vorangehenden Ansprüche,
wobei die Lotpaste (7) in einem Druck- oder Tauchverfahren auf die Stirnseiten (2a, 2b) des Grundkörpers (2) aufgebracht wird.

5. Verfahren nach einem der vorangehenden Ansprüche,
wobei die Lotpaste (7) Silber und Kupfer aufweist.

6. Verfahren nach einem der Ansprüche 1 bis 5, bei dem zur Herstellung der Lotpaste (7) Komponenten bei Umgebungstemperatur miteinander vermengt werden, so dass eine Lotpaste (7) mit den folgenden Be-standteilen entsteht:
- Silberpulver (Ag) zu 35 bis 65 Gewichts-%,
- Kupferpulver (Cu) zu 13 bis 30 Gewichts-%,
- Bindemittel zu 0,5 bis 15 Gewichts-%, und
- Lösungsmittel zu 5 bis 40 Gewichts-%.

7. Verfahren nach einem der vorangehenden Ansprüche,
wobei zur Ausbildung der Lotpaste (7) Metalle in Pulverform bereitgestellt werden, und wobei ein Bindemittel und ein Lösungsmittel den Metallen flüssig beigemischt werden.

8. Verfahren nach einem der vorangehenden Ansprüche,
wobei die Verbindung von Elektroden (3) und Grundkörper (2) bei einer Temperatur von 790° C bis 870° C unter einer vorgegebenen Atmosphäre erfolgt.

9. Verfahren nach einem der vorangehenden Ansprüche,
wobei der Grundkörper (6) einen Hohlraum (6) aufweist, und wobei die Elektroden (3) an den Stirnseiten (2a, 2b) zumindest teilweise in den Hohlraum (6) eingebracht werden und über die Lotpaste (7) mit dem Grundkörper (2) verbunden werden.

10. Verfahren nach einem der vorangehenden Ansprüche,
wobei eine Vielzahl von keramischen Grundkörpern (2) bereitgestellt wird, und wobei die Grundkörper (2) nebeneinander in einen Halter (8) eingesetzt werden.

## Claims

1. Process for producing a gas-tight metal-ceramic connection, comprising the steps of:
A) providing at least one ceramic main body (2) having a first end face (2a) and a second end face (2b), wherein the main body (2) is formed in an annular or cylindrical manner and has a cavity (6), which completely penetrates the main body (2), and the end faces (2a, 2b) are arranged opposite one another and are connected to one another by a lateral surface of the main body (2),
B) applying a metallization to at least a partial region of the end faces (2a, 2b) of the main body (2),
C) applying a nickel layer to the metallized partial region of the end faces (2a, 2b),
D) providing and applying a solder paste (7) to the metallized partial region of the first end face (2a) and/or the second end face (2b) of the main body (2),
E) drying the solder paste (7),
F) firing the solder paste (7),
G) providing electrodes (3),
H) arranging an electrode (3) on each of the first end face (2a) and the second end face (2b) of the main body (2) and connecting the electrodes (3) and the main body (2) .

2. Process according to claim 1,
wherein the application of the solder paste (7) to the first and second end faces (2a, 2b) is performed simultaneously.

3. Process according to claim 1,
wherein solder paste (7) is first applied to the first end face (2a) and steps D) and E) are subsequently carried out, before solder paste (7) is applied to the second end face (2b) and steps D) and E) are repeated for the second end face (2b) of the main body (2).

4. Process according to one of the preceding claims, wherein the solder paste (7) is applied to the end faces (2a, 2b) of the main body (2) in a printing or dipping process.

5. Process according to one of the preceding claims, wherein the solder paste (7) comprises silver and copper.

6. Process according to one of Claims 1 to 5, in which, in order to produce the solder paste (7), components are mixed with one another at ambient temperature, so that a solder paste (7) with the following constituents is obtained:
- silver powder (Ag) accounting for 35% to 65% by weight,
- copper powder (Cu) accounting for 13% to 30% by weight,
- binder accounting for 0.5% to 15% by weight, and
- solvent accounting for 5% to 40% by weight.

7. Process according to one of the preceding claims, wherein metals in powder form are provided in order to form the solder paste (7), and wherein a binder and a solvent are admixed in a liquid state with the metals.

8. Process according to one of the preceding claims, wherein the connection of the electrodes (3) and the main body (2) is performed at a temperature of 790°C to 870°C under a prescribed atmosphere.

9. Process according to one of the preceding claims,
wherein the main body (6) has a cavity (6), and wherein the electrodes (3) on the end faces (2a, 2b) are at least partially introduced into the cavity (6) and are connected to the main body (2) by way of the solder paste (7).

10. Process according to one of the preceding claims, wherein a multiplicity of ceramic main bodies (2) are provided, and wherein the main bodies (2) are inserted next to one another into a holder (8).

## Revendications

1. Procédé de réalisation d'une liaison métal-céramique étanche aux gaz, ledit procédé comprenant les étapes suivantes :
A) fournir au moins un corps de base en céramique (2) pourvu d'une première face frontale (2a) et d'une deuxième face frontale (2b), le corps de base (2) ayant une forme annulaire ou cylindrique et comportant une cavité (6) qui traverse complètement le corps de base (2), et les faces frontales (2a, 2b) étant disposées l'une en face de l'autre et étant reliées entre elles par une surface latérale du corps de base (2),
B) appliquer une métallisation sur au moins une zone partielle des faces frontales (2a, 2b) du corps de base (2),
C) appliquer une couche de nickel sur la zone partielle métallisée des faces frontales (2a, 2b),
D) fournir et appliquer une pâte à braser (7) sur la zone partielle métallisée de la première face frontale (2a) et/ou de la deuxième face frontale (2b) du corps de base (2),
E) sécher la pâte à braser (7),
F) brûler la pâte à braser (7),
G) fournir des électrodes (3),
H) disposer une électrode (3) sur chacune des première et deuxième faces frontales (2a, 2b) du corps de base (2) et relier les électrodes (3) et le corps de base (2).

2. Procédé selon la revendication 1,
l'application de la pâte à braser (7) étant effectuée simultanément sur la première et la deuxième face frontale (2a, 2b).

3. Procédé selon la revendication 1,
la pâte à braser (7) étant d'abord appliquée sur la première face frontale (2a) puis les étapes D) et E) étant effectuées avant d'appliquer la pâte à braser (7) sur la deuxième face frontale (2b) et les étapes D) et E) étant répétées pour la deuxième face frontale (2b) du corps de base (2).

4. Procédé selon l'une des revendications précédentes, la pâte à braser (7) étant appliquée sur les faces frontales (2a, 2b) du corps de base (2) par un procédé d'impression ou d'immersion.

5. Procédé selon l'une des revendications précédentes, la pâte à braser (7) comprenant de l'argent et du cuivre.

6. Procédé selon l'une des revendications 1 à 5, dans lequel, pour produire la pâte à braser (7), des composants sont mélangés entre eux à température ambiante de façon à obtenir une pâte à braser (7) ayant les constituants suivants :
- poudre d'argent (Ag) : 35 à 65 % en poids,
- poudre de cuivre (Cu) : 13 à 30 % en poids,
- liant : 0,5 à 15 % en poids, et
- solvant : 5 à 40 % en poids.

7. Procédé selon l'une des revendications précédentes,
les métaux étant fournis sous forme de poudre pour former la pâte à braser (7), et un liant et un solvant étant mélangés sous forme liquide aux métaux.

8. Procédé selon l'une des revendications précédentes, la liaison des électrodes (3) et du corps de base (2) étant effectuée à une température allant de 790°C à 870°C sous une atmosphère spécifiée.

9. Procédé selon l'une des revendications précédentes,
le corps de base (6) comportant une cavité (6), et les électrodes (3) sur les faces frontales (2a, 2b) étant au moins partiellement introduites dans la cavité (6) et étant reliées au corps de base (2) par le biais de la pâte à souder (7).

10. Procédé selon l'une des revendications
précédentes, un grand nombre de corps de base en céramique (2) étant fourni, et les corps de base (2) étant insérés les uns à côté des autres dans un support (8) .
